# EUROPÄISCHE PATENTSCHRIFT

(11) **EP 1 352 234 B1**
(45) Veröffentlichungstag und Bekanntmachung des Hinweises auf die Patenterteilung: **12.11.2008**
(21) Anmeldenummer: 01947148.1
(22) Anmeldetag: 12.05.2001
(51) Int. Cl.: G01N 29/04, G01N 29/44

(54) **VERFAHREN UND VORRICHTUNG ZUR ULTRASCHALLPRÜFUNG VON ROHREN ZUM NACHWEIS VON AN EINER INNENWAND DES ROHRES BEFINDLICHEN BEULEN**
METHOD AND DEVICE FOR CONDUCTING ULTRASONIC TESTING OF PIPES IN ORDER TO DETECT DENTS IN THE INNER WALL OF THE PIPE
PROCEDE ET DISPOSITIF D'ANALYSE DE TUYAUX AUX ULTRASONS, PERMETTANT LA DETECTION DE BOSSES FORMEES CONTRE LA PAROI INTERNE DU TUYAU

(30) Priorität: 28.12.2000 DE 10065093
(43) Veröffentlichungstag der Anmeldung: 15.10.2003
(73) Patentinhaber: Agfa NDT GmbH, D-50354 Hürth (DE)
(72) Erfinder: MEYER, Peter, 46539 Dinslaken (DE); PRAUSE, Reinhard, 53757 St. Augustin (DE)
(74) Vertreter: Bauer, Wulf
(86) Internationale Anmeldenummer: PCT/DE2001/001815
(87) Internationale Veröffentlichungsnummer: WO 2002/054059

(56) Entgegenhaltungen:
- EP-A- 0 335 808
- DE-A- 2 621 223
- US-A- 3 916 676
- US-A- 5 648 613

## Beschreibung

Die Erfindung bezieht sich auf ein Verfahren für die Prüfung von Rohren auf Defekte nach dem Oberbegriff des Patentanspruchs 1 und eine Vorrichtung zum Nachweis derartiger Defekte nach dem Oberbegriff des Patentanspruchs 4. Das Verfahren und die Vorrichtung der eingangs genannten Art sind aus der DE 26 21 223 A1 bekannt.

Die US 3 916 676 A beschreibt ein Verfahren und eine Vorrichtung zur US-Prüfung elektrischer, ummantelter Kabel, insbesondere Prüfung der Wanddicke des Kunststoffmantels und der Unrundheit. Die US 5 648 613 A bezieht sich auf die US-Prüfung unterirdischer Gasleitungen. Es ist ein mobiles Prüfgerät, auch Molch genannt, vorgesehen, siehe z.B. Fig. 1. Gemessen wird von innen und somit nicht von außen. Gemessen wird die Wanddicke. Die EP 0 335 808 A bezieht sich auf das Erfassen von Überzügen (Auflagen, Plattierungen) von Rohren. Die Überzüge sollen mind. 0,4 mm dick sein und eine akustische Impedanz haben, die zumindest 1 % unterschiedlich ist von derjenigen des darunter befindlichen Materials.

Verfahren und Vorrichtungen zum Prüfen von Rohren mittels Ultraschall sind allgemein bekannt. Zum Stand der Technik wird allgemein verwiesen auf das DE-Buch "Werkstoffprüfung mit Ultraschall" J. Krautkrämer und H. Krautkrämer, 4. Aufl., sowie speziell auf die Dokumente DE 44 10 580 A1 und DE 199 31 350 A1. Daraus sind unterschiedliche Verfahren und Vorrichtungen bekannt. Verwendet werden heute im Wesentlichen sogenannte Rotationsprüfmaschinen, bei denen die Ultraschallprüfung automatisch erfolgt. Das Rohr und/oder der mindestens eine Ultraschallprüfkopf werden so bewegt, dass die Oberfläche des zu prüfenden Rohres systematisch abgetastet wird. Die Ankopplung erfolgt vorzugsweise über eine Wasservorlaufstrecke. Typischerweise befindet sich das Wasser in einer zylindrischen Kammer einer Rotationsprüfmaschine.

Die derzeit bekannten Prüfvorrichtungen für Rohre sind nicht dazu ausgelegt, Beulen an Innenwänden von Rohren einfach aufzufinden. Es ist zwar bekannt, mit schräg eingeschallten Transversalwellen, die in Umfangsrichtung sich zick-zack-förmig im Rohrmantel ausbreiten, zu arbeiten. Beulen der hier in Rede stehenden Art lassen sich aber auf diese Weise nicht sicher nachweisen. Zudem ist eine Automatisierung des Verfahrens schwierig und erfolgt die Einschallung deutlich abweichend von einer Radialrichtung.

Weiterhin ist es möglich, über eine Wanddickenmessung Beulen der hier in Rede stehenden Art an Rohren nachzuweisen. Die Wanddickenmessung wird üblicherweise mit rotierenden Prüfkopfsystemen bei linearem Transport der Rohre angewandt. Alternativ ist auch ein schraubenlinienförmiger Transport der Rohre bei feststehenden Prüfköpfen möglich. Dadurch kann eine hundertprozentige Prüfung kann jeweils durchgeführt werden. Das Prüfverfahren setzt im Bereich der Beulen voraus, dass die Wanddicke gemessen werden kann. Aufgrund der speziellen Ausbildungen der Beulen an der Innenwand treten jedoch häufig Messunterbrechungen auf, die keine eindeutige Bewertung zulassen. Weiterhin ist eine hohe Prüfdichte erforderlich, die üblicherweise bei den bekannte Prüfeinrichtungen nicht vorhanden ist.

Die Kontrolle von Rohren auf Beulen an der Innenseite wird zumeist noch manuell, mittels Lampen von den zwei offenen Rohrenden her durchgeführt. Eine derartige Prüfung ist nicht zuverlässig. Bei langen Rohren ist eine Fehlererkennung im mittleren Bereich nur sehr schwierig möglich.

Bei den Rohren der hier in Rede stehenden Art handelt es sich um vorzugsweise sogenannte Conti-Rohre. Ausgehend von einem kurzen und dicken Rohrstück wird solange warmgewalzt, bis dieses eine grosse Länge, einen kleineren Durchmesser und eine normale Wanddicke aufweist. Es handelt sich also um nahtlos geformte, warmgefertigte Stahlrohre. Der Aussendurchmesser liegt typischerweise zwischen 30 und 90 mm, die Wandstärke liegt zumeist zwischen 3 und 8 mm. Derartige Rohre werden beispielsweise für Wärmetausche, teilweise auch für Heizkörper eingesetzt. Während die einer Sichtprüfung direkt zugängliche Aussenwand im allgemeinen glatt und recht gut zylindrisch ist, treten an der Innenwand stellenweise konkave Verformungen, insbesondere Beulen auf. An der Stelle dieser Beulen fehlt Material. Dadurch wird die Druckfestigkeit des Rohres an der betreffenden Stelle stark beeinträchtigt.

Der Erfindung liegt die Aufgabe zugrunde, ein Verfahren und eine Vorrichtung zum Nachweis von derartigen Beulen an Rohren anzugeben, um eine automatische Erfassung derartiger Beulen zu ermöglichen, wobei eine Integration in vorhandene Anlagen; insbesondere Rotationsprüfmaschinen und ein sicheres Erkennen der Beulen möglich sein soll.

Verfahrensmässig wird diese Aufgabe gelöst durch ein Verfahren mit den Merkmalen des Patentanspruchs 1, vorrichtungsmäßig durch die Vorrichtung mit den Merkmalen des Patentanspruchs 4.

Die Erfindung macht es sich zunutze, dass bei senkrecht in die Rohrwandung einschallenden Prüfköpfen Mehrfachreflexionen auftreten. Ein eingeschallter Ultraschallimpuls läuft bis zur Rohrinnenwand, von dort zurück zur Aussenwand, wieder zurück zur Innenwand usw. Bei jedem Auftreffen auf die Aussenwand wird ein Teil des Impulses über die Ankopplungsflüssigkeit einem empfangenden Prüfkopf zugeführt. Vorzugsweise ist dieser empfangende Prüfkopf derselbe wie der Sendeprüfkopf, das Senden und Empfangen erfolgt zeitversetzt.

Aufgrund des Hin- und Herlaufs in der Rohrwand wird ein- und dieselbe Stelle an der Rohrinnenwand mehrfach getroffen. Ist diese Stelle an der Rohrinnenwand fehlerfrei, so hat sie ein hohes Reflexionsvermögen in die Einschallrichtung. Ist sie aber gestört, beispielsweise Teil einer Beule, so ist das Reflexionsvermögen deutlich geringer. Auch wenn die Beule völlig glatt ist, verläuft sie jedoch nicht parallel zur Achslinie des Rohres und wird der reflektierte Impuls V-förmig abgelenkt, jedenfalls läuft er nicht mehr auf derselben Bahn zurück, auf der er gekommen ist.

Die Erfindung hat nun den besonderen Vorteil, dass besonders auf Reflexionen bzw. Rückwandechos oder Echoimpulse höherer Ordnung geachtet werden kann. Je höher die Ordnung n der Reflexion ist, um so stärker ist der Fehler ausgeprägt, da immer wieder dieselbe Stelle an der Rohrinnenwand abgefragt wird. Ein Fehler addiert sich dadurch im Messergebnis auf. Anders ausgedrückt hat die Messung einen Effekt einer Selbstverstärkung. Dieser Effekt tritt aber nur bei Fehlstellen auf.

Das Verfahren kann bei Rotationsprüfanlagen einfach angewandt werden, bestehende Anlagen können einfach nachgerüstet werden. Ein ohnehin vorhandener Prüfkopf für senkrechte Einschallung, wie er beispielsweise für die Wanddickenmessung verwendet wird, wird so speziell betrieben und ausgewertet, dass insbesondere auf Reflexionen höherer Ordnung geachtet wird. Auf diese Weise lassen sich die Beulen auffinden. Es können aber auch vorhandene Fehlerprüfköpfe zur Längsfehlerprüfung benutzt werden, die für die Prüfung senkrecht eingestellt werden.

Die Mehrfachreflexionen an einer fehlerfreien Rohrinnenwand und einer fehlerfreien Rohraussenwand sind insbesondere bei Prüfköpfen mit mittlerer Bedämpfung besonders ausgeprägt. Bei einer idealen Rückwand können 20 und mehr Reflexionen auftreten. Werden die Schallwellen jedoch an den Beulen gestört oder nur geringfügig abgelenkt, so addieren sich die Störungen in den höheren Reflexionen und kann bei Beobachtung der höheren Reflexionen, insbesondere bei Beobachtung des Abfalls der Echofolge, ein klares Signal für eine Störung an der Innenwand erhalten werden. Aufgrund der senkrechten Einschallung lässt sich der Fehler an der Innenwand genau lokalisieren. Er lässt sich auch örtlich erfassen und ausmessen.

In bevorzugter Weiterbildung des Verfahrens wird zugleich mit dem Nachweis der Beulen mittels desselben Prüfkopfes auch die Wanddicke erfasst über einen ersten Echoimpuls.

In bevorzugter Weiterbildung der Vorrichtung wird als sendender Ultraschallprüfkopf und als empfangender Ultraschallprüfkopf ein einziger Ultraschallprüfkopf, der nacheinander als sendend und empfangend betrieben wird, eingesetzt.

Weiterhin ist es vorteilhaft, in der Auswerteeinheit ein Zähler für Echoimpulse vorzusehen und die Auswertung erst durch einen höheren Echoimpuls, z. B. n=3 oder n = 5 zu starten.

Weitere Vorteile und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung näher erläutert werden. Dabei werden auch die verfahrensmässigen Schritte dargestellt. In der Zeichnung zeigen:
Figur 1: einen Schnitt in einer Radialebene durch eine Rotationsprüfmaschine und ein darin befindliches Rohr,
Figur 2: der Verlauf eines Ultraschallimpulses in einem Rohr bei Einschallung wie in Figur 1 und bei senkrechtem Hin- und Herlauf, jedoch aufgelöst über der Zeit, also mit Zeitachse t, zur Darstellung einer Echofolge,
Figur 3: ein Diagramm des elektrischen Signals der Spannung U in Volt aufgetragen über die Zeit t in Sekunden für ein Rohr mit idealen Wänden, aufgenommen in einer Vorrichtung entsprechend Figur 1,
Figur 4: ein Teilstück eines Schnittbildes wie in Figur 1, jedoch nunmehr mit einem Rohr, das eine Beule mit glatter Wandung hat,
Figur 5: die Darstellung einer Echofolge in Form eines Diagramms wie in Figur 3 für die Messung an der Innenbeule gemäss Figur 4,
Figur 6: ein Schnittbild ähnlich Figur 4, jedoch nunmehr mit einem Rohr, das eine Beule mit einer aufgerauhten Wandung hat,
Figur 7: eine Darstellung ähnlich Figur 4, jedoch nunmehr mit einem Testfehler an der Rohrinnenwand.

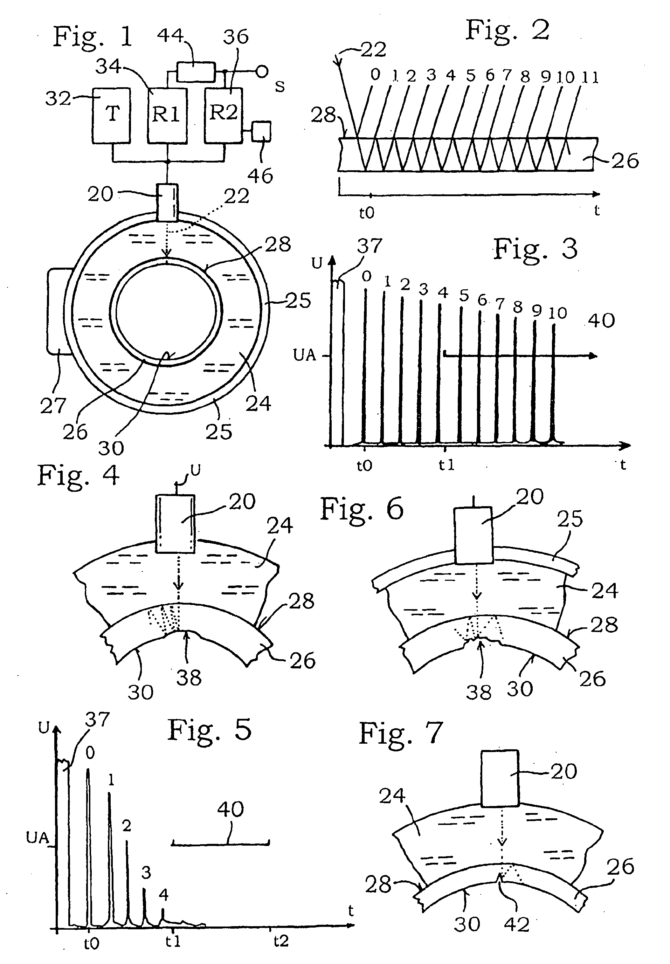

Figur 1 zeigt schenmatisch dargestellt eine Rotationsprüfmaschine. Von einem Prüfkopf 20 wird ein Ultraschallimpuls, der durch einen Pfeil 22 symbolisiert ist, durch einen wassergefüllten Innenraum 24 der Rotationsprüfmaschine senkrecht auf ein zu prüfendes Rohr 26 eingeschallt. Die Rotationsprüfmaschine hat ein Gestell 25 und einen Antrieb 27. Der Impuls trifft eine Aussenwand 28 des Rohres 26. Von dieser Oberfläche geht ein Teil direkt zurück in den Prüfkopf 20 als sogenanntes Eintrittsecho. Der grössere Anteil des Impulses durchläuft aber das Volumen des Rohres bis hin zu einer Innenwand 30. Dort wird praktisch der gesamte verbliebene Impuls reflektiert und läuft zur Oberfläche 28 zurück. Es kommt zu mehrmaligen Hin- und Herläufen, wenn die Oberflächen der beiden Wände 28, 30 entsprechend beschaffen sind. Üblicherweise wird nicht nur ein einzelner Ultraschallimpuls eingeschallt, sondern es wird mit einer Impulsfolge gearbeitet.

In Figur 2 ist der zeitliche Ablauf dieses Hin- und Herlaufs schematisch dargestellt. Zu erkennen ist der wiederum mit einem Pfeil 22 dargestellte Impuls, der auf die Aussenwand 28 auftrifft. Das Eintrittsecho ist mit 0 bezeichnet. Aufgrund der speziellen Darstellung mit einer zeitlichen Auflösung verläuft der im Volumen hin- und herlaufende Impuls nunmehr zick-zack-förmig. Dadurch kann man die einzelnen Hin- und Herläufe voneinander unterscheiden, denn tatsächlich fallen Hin- und Herweg exakt zusammen, jedenfalls solange ideale Verhältnisse an den Oberflächen der Wände 28, 30 vorliegen. Nach einem ersten Hin- und Herlauf tritt ein erstes Rückwandecho, das mit 1 bezeichnet ist, aus der Aussenwand 28 aus. Entsprechend gibt es weitere Rückwandechos, die durchnummeriert sind, siehe z.B. n=7.

Der Prüfkopf 20 wird als Sende- und Empfangsprüfkopf betrieben. Es ist zwar in einer Alternative möglich, mit separaten Prüfköpfen zu arbeiten, ein Sende- und Empfangsprüfkopf wird aber bevorzugt. Der Prüfkopf 20 ist an einen Sender T 32 und an zwei Empfangsschaltungen R1 und R2 angeschlossen. Die erste Empfangsschaltung 34, auch Auswertevorrichtung genannt, ermöglicht eine Auswertung der Dicke. Hier wird die Laufzeit zwischen dem Eintrittsecho, also dem Echo n=0, und dem ersten Rückwandecho n= 1 bestimmt und hieraus die Dicke ermittelt. Diese erste Empfangsschaltung 34 ist Stand der Technik.

In einer zweiten Empfangsschaltung 36, auch Auswerteeinheit genannt, wird das Verhalten, insbesondere der Abfall, der Rückwandechos ermittelt. Figur 3 zeigt das elektrische Signal U am Ausgang des Prüfkopfes 20. Nachdem der Sendeimpuls, der wegen seiner hohen Spannung hier nicht vollständig dargestellt werden kann, abgeklungen ist, kommt zum Zeitpunkt t0 das Eintrittsecho an. Ihm schliessen sich in periodischer Folge und mit abnehmender Amplitude die Signale der Rückwandechos an, sie sind entsprechend durchnummeriert. Die in Figur 3 dargestellten Verhältnisse für die Amplitude aufeinanderfolgender Rückwandechos sind nur beispielhaft zu verstehen.

Es gibt nun mehrere Möglichkeiten der Auswertung dahingehend, ob die Rückwandechos von einer intakten Innenwand 30 kommen oder von einer Innenwand mit einer Beule 38, wie sie in Figur 4 dargestellt ist. Die zugehörige Impulsfolge entsprechend Figur 3 ist in Figur 5 wiedergegeben.

Wie Figur 3 zeigt, wird mit einem höheren Rückwandecho, beispielsweise n = 4, eine Auswerteblende 40 gestartet. Sie hat einen einstellbaren Schwellenwert UA. Es kann nun die Anzahl aller Rückwandechos ermittelt werden, die noch über diese Auswerteblende 40 ragen. In der Darstellung nach Figur 3 sind es relativ viele Rückwandechos n = 5 bis n = 10, die weiteren sind nicht dargestellt. Dagegen gibt es in der Darstellung nach Figur 5 kein einziges Rückwandecho, das über die Auswerteblende 40 ragt.

Man kann auch, wie in Fig. 5 dargestellt, ein festes Ende der Auswerteblende 40 vorgeben, beispielsweise wird die Auswerteblende nach einer vorgegebenen Zeitspanne, die man beispielsweise aus einem Vielfachen des Zeitunterschiedes zwischen dem Eintrittsecho n=0 und dem ersten Rückwandecho n=1 ermittelt oder die man fest oder einstellbar vorgibt. Diese Zeitspanne bzw. das Zeitfenster beginnt bei t1 und endet bei t2. Es wird nun ermittelt, ob überhaupt Rückwandechos den Schwellenwert UA dieser Auswerteblende 40 übersteigen oder nicht, es kann auch die Anzahl der übersteigenden Rückwandechos gezählt werden.

Es können auch die einzelnen Rückwandechos individuell erfasst und verglichen werden, beispielsweise genügt es, ihre Amplitude zu erfassen und in einer Auswerteschaltung die Amplituden mehrerer Rückwandechos zu bewerten.

Bei dieser Auswertung hat der Fachmann sein gesamtes Wissen zur Verfügung, das er aus der Auswertung von Fehlern bei der Ultraschallprüfung hat. Es kann beispielsweise die Verstärkung der Empfangsschaltung 36 eingestellt werden, der Start der Auswerteblende 40 kann variiert werden und auf unterschiedliche Weise erfolgen. Die Breite kann variiert werden.

Figur 4 zeigt nun den Fall einer Beule 38. In der gezeigten Ausführung soll die Beule eine glatte Oberfläche aufweisen. Es kommt daher an der Innenwand 30, an der sich die Beule 38 befindet, durchaus zu mehrfachen Reflexionen, es ist aber nunmehr der Rückweg nicht mehr deckungsgleich mit dem Hinweg, vielmehr tritt ein geringfügiger Winkelversatz auf, wie er in Figur 4 zur besseren Verständlichkeit der Darstellung übertrieben gross eingezeichnet ist. Man erkennt, dass die Rückwandechos schrittweise aus dem Empfangsbereich des Prüfkopfes 20 hinauswandern. Dies bedeutet, dass die Rückwandechos deutlich stärker abfallen als in Figur 3, der stärkere Abfall ist in Figur 5 dargestellt. Mittels der Auswerteblende 40 lässt sich feststellen, dass kein Rückwandecho über n = 5 noch den gewählten Spannungswert UA der Auswerteblende überschreitet. In diesem Fall wird ein Fehlersignal S von der Empfangsschaltung 36 ausgegeben.

Figur 6 zeigt den Fall einer Fehlstelle 38 an der Innenwand 30, die eine unglatte Oberfläche hat. Hier kommt es zu einer Streuung des Ultraschallimpulses an der Innenwand 30. Auch dies führt zu einem deutlich erkennbaren Abfall der Folge der Echoimpulse.

Figur 7 schliesslich zeigt ein Rohr 26, in das zu Testzwecken bewusst eine Kerbe 42 eingearbeitet ist. Diese dient zum Justieren der gesamten Prüfanlage.

Wie Figur 1 zeigt, sind die Ausgänge der ersten Empfangsschaltung 34 und der zweiten Empfangsschaltung 36 jeweils an Eingänge eines Korrelators 44 geschaltet. Da bei einer Beule 38 die Wanddicke des Rohres 26 abnimmt, deutet eine zu geringe Wanddicke auf eine Beule 38 hin. Wird aber von der ersten Empfangsschaltung 34 eine völlig ungestörte Wanddicke empfangen, ist dies ein Hinweis darauf, dass keine Beule vorliegt. Eine Verknüpfung der beiden Empfangsschaltungen 34, 36 ermöglicht es, die Genauigkeit der Anzeige der Vorrichtung zu verbessern. So kann beispielsweise ein Fehlersignal "Beule" nur dann ausgegeben werden, wenn einerseits die zweite Empfangsschaltung 36 eine Beule nachweist, wie dies voranstehend beschrieben wurde, und zusätzlich das Signal über die Wanddicke von der ersten Empfangsschaltung 34 ausbleibt, ausserhalb eines Toleranzbereiches liegt oder anderweitig gestört ist. Wegen der besseren Empfindlichkeit für Beulen sollte die zweite Empfangsschaltung 36 Vorrang haben vor der einfachen Dickenmessung mittels der ersten Empfangsschaltung 34. Mit 44 ist ein Signalfolgezähler bezeichnet, der der zweiten Empfangsschaltung 36 zugeordnet ist.

In der Beschreibung ist bisher auf die Qualität der Oberfläche der Aussenwand 28 nicht eingegangen worden. Die Qualität der Oberfläche der Aussenwand 28 beeinflusst alle Echosignale, einschliesslich des Eintrittsechos. Eine Überwachung des Eintrittsechos kann also dazu dienen, die Qualität der Oberfläche der Aussenwand 28 zu bestimmen und dies bei der Auswertung zu berücksichtigen. Der Sender 32 kann so betrieben werden, dass das Eintrittsecho konstant bleibt, also immer auf eine konstante Amplitude eingeregelt wird.

## Patentansprüche

1. Verfahren zur Ultraschallprüfung von Rohren zum Nachweis von Defekten des Rohres (26), mit folgenden Verfahrensschritten:
- Einschallen von Ultraschallimpulsen aus einem Ultraschallprüfkopf (20) in das zu testende Rohr (26) von aussen und auf eine Aussenwand (28) des zu testenden Rohres (26),
- Ausbilden eines n-fachen Hin- und Herlaufs zwischen der Aussenwand (28) und einer Innenwand (30) des Rohres (26), wobei bei jedem Hin- und Herlauf des Impulses ein Teil als Echoimpuls aus der Aussenfläche austritt,
- Empfangen dieser Echoimpulse mittels eines empfangenden Ultraschallprüfkopfes, der die Echoimpulse in elektrische Signale umsetzt, und
- Auswerten der elektrischen Signale in einer Auswerteeinheit (36), wobei in der Auswerteeinheit (36) die elektrischen Signale mehrerer Echoimpulse ausgewertet werden und in der Auswerteeinheit (36) eine Auswerteblende (40) vorgesehen ist, in die mehrere Echoimpulse hineinfallen und die einen Schwellenwert UA aufweist,
**dadurch gekennzeichnet, dass** die Defekte konkave, an einer Innenwand (30) befindliche Verformungen in Form von Beulen (38) sind, dass das Einschallen der Ultraschallimpulse im wesentlichen radial auf die Aussenwand (28) erfolgt, dass bei dem mehrfachen Hin- und Herlauf in der Rohrwand ein- und dieselbe Stelle an der Rohrinnenwand mehrfach getroffen wird, und dass das Auswerten der mehreren elektrischen Signale in der Auswerteeinheit (36) dahingehend erfolgt, wie stark der Abfall der mehreren elektrischen Signale der Echoimpulse ist, dass die Auswerteblende (40) nach einem Vielfachen des Zeitunterschieds zwischen einem Eintrittsecho n=0 und einem ersten Rückwandecho n=1 gestartet wird, und dass ein starker Abfall der mehreren elektrischen Signale unterhalb des Schwellenwertes UA als Beule (38) angezeigt wird und eine schwache Abnahme der mehreren elektrischen Signale als beulenfreies Rohr (26) angezeigt wird.

2. Verfahren nach Anspruch 1, **dadurch gekennzeichnet, dass** zugleich mit dem Nachweis der Beulen (38) mittels desselben Prüfkopfes (20) auch die Wanddicke erfasst wird über einen ersten Echoimpuls.

3. Verfahren nach Anspruch 1, **dadurch gekennzeichnet, dass** das Rohr (26) während der Prüfung systematisch abgetastet wird und eine Relativbewegung zwischen dem Rohr (26) und dem mindestens einen Ultraschallprüfkopf (20) erfolgt.

4. Vorrichtung zur Ultraschallprüfung von Rohren zum Nachweis von Defekten des Rohres (26), und zur Durchführung des Verfahrens nach Patentanspruch
- mit einem Ultraschallprüfkopf (20), der an einem Gestell angeordnet ist und von aussen im wesentlichen radial auf eine Aussenfläche eines zu testenden Rohres (26) gerichtet ist und von dem Ultraschallimpulse in das Rohr (26) eingeschallt werden, die an einer Innenwand (30) des Rohres (26) reflektiert werden und die n-fach zwischen Aussenwand (28) und Innenwand (30) hin- und herlaufen, wobei jeweils ein Teil des Impulses aus der Aussenwand (28) als Echoimpuls austritt und eine Folge von Echoimpulsen in einen empfangenden Prüfkopf (20) gelangt, der am Gestell angeordnet ist und
- mit einer Auswerteeinheit (36), die dem empfangenden Prüfkopf (20) nachgeschaltet ist und in der die Echoimpulse bewertet werden, wobei in der Auswerteeinheit (36) eine Auswerteblende (40) vorgesehen ist, in die mehrere Echoimpulse hineinfallen und die einen Schwellenwert UA aufweist,
**dadurch gekennzeichnet, dass** zur Erfassung von Defekten, die als konkave Innenverformungen in Form von Beulen (38) ausgebildet sind, in der Auswerteeinheit (36) mehrere Echoimpulse mittels des Schwellenwertes UA bewertet werden, dass der Beginn der Auswerteblende (40) nach einem Vielfachen des Zeitunterschieds zwischen einem Eintrittsecho n=0 und einem ersten Rückwandecho n= 1 liegt, und dass ein unterhalb des Schwellenwertes UA liegender Abfall der mehreren, in die Auswerteblende (40) fallenden elektrischen Signale der Echoimpulse als Beule (38) bewertet und angezeigt wird.

5. Vorrichtung nach Anspruch 4, **dadurch gekennzeichnet, dass** als sendender Ultraschallprüfkopf und als empfangender Ultraschallprüfkopf ein einziger Ultraschallprüfkopf (20), der zeitlich nacheinander als sendend und empfangend betrieben wird, eingesetzt ist.

6. Vorrichtung nach Anspruch 5, **dadurch gekennzeichnet, dass** dem Prüfkopf (20) zusätzlich eine Auswertevorrichtung (34) für die Bestimmung der Wanddicke des Rohres (26) nachgeschaltet ist.

7. Vorrichtung nach Anspruch 4, **dadurch gekennzeichnet, dass** in der Auswerteeinheit (36) ein Zeitfenster ausgebildet ist, das eine vorgegebene Anzahl von elektrischen Signalen von Echoimpulsen, beispielsweise die Signale des fünften bis achten Echoimpulses, erfasst.

8. Vorrichtung nach Anspruch 4, **dadurch gekennzeichnet, dass** die Vorrichtung einen Antrieb (27) aufweist, der eine Relativbewegung zwischen dem Rohr (26) und dem mindestens einen Prüfkopf (20) ermöglicht.

9. Vorrichtung nach Anspruch 4, **dadurch gekennzeichnet, dass** die Auswerteeinheit (36) einen Signalfolgezähler (44) aufweist.

10. Vorrichtung nach Anspruch 4, **dadurch gekennzeichnet, dass** in der Auswerteeinheit ein Zähler (44) für Echoimpulse vorgesehen ist und dass die Auswertung erst durch einen höheren Echoimpuls, z. B. n größer 4 oder n größer 7, gestartet wird.

## Claims

1. A method of ultrasonic inspection of pipes for detecting flaws of the pipe (26), involving the following method steps:
- insonifying from outside ultrasonic pulses from an ultrasonic probe (20) into the pipe to be tested (26) and onto an outer wall (28) of the pipe to be tested (26),
- configuring an n-times reciprocating travel between said outer wall (28) and an inner wall (30) of said pipe (26), a portion of the reciprocating pulse exiting the outer surface in the form of an echo pulse at each back and forth travel,
- receiving said echo pulses by means of a receiving ultrasonic probe which converts the echo pulses into electrical signals, and
- evaluating said electrical signals in an evaluation unit (36), the electrical signals of several echo pulses being evaluated in said evaluation unit (36) and there being provided in said evaluation unit (36) an evaluating aperture (40) into which several echo pulses fall and which comprises a threshold value UA,
**characterized in that** said flaws are concave deformations in the form of dents (38) located on an inner wall (30), that the ultrasonic pulses are insonified substantially radially onto the outer wall (28), that during the multiple back and forth travel in the pipe wall they strike one and the same place several times, and that the several electrical signals in the evaluation unit (36) are evaluated with respect to how strongly the several electrical signals of the echo pulses drop, that the evaluating aperture (40) is started after a multiple of the time difference between an entrance echo n=0 and a first back wall echo n=1, and that a strong drop of the several electrical signals below the threshold value UA is displayed as a dent (38) and a slight weakening of the several electrical signals is displayed as a dent-free pipe (26).

2. The method as set forth in claim 1, **characterized in that**, through a first echo pulse, the same probe (20) detects the wall thickness at the same time it detects the dents (38).

3. The method as set forth in claim 1, **characterized in that** the pipe (26) is scanned systematically during inspection and that a relative movement occurs between the pipe (26) and the at least one ultrasonic probe (20).

4. An apparatus for ultrasonic inspection of pipes for detecting flaws of the pipe (26) and for carrying out the method as set forth in claim 1,
- with an ultrasonic probe (20) that is disposed on a frame and is directed from outside, substantially radially, onto an outer surface of a pipe to be tested (26) and from which ultrasonic pulses are insonified into the pipe (26), which are reflected from an inner wall (30) of said pipe (26) and which travel n-times back and forth between the outer wall (28) and the inner wall (30), a portion of each pulse exiting the outer wall (28) in the form of an echo pulse and a sequence of echo pulses entering a receiving probe (20) that is disposed on the frame and
- with an evaluation unit (36) that is mounted downstream of the receiving probe (20) and in which the echo pulses are evaluated, there being provided in said evaluation unit (36) an evaluating aperture (40) into which several echo pulses fall and which comprises a threshold value UA,
**characterized in that**, for detecting flaws configured as concave inner deformations in the form of dents (38) several echo pulses are evaluated in said evaluation unit (36) by means of said threshold value UA, that the beginning of the evaluating aperture (40) lies after a multiple of the time difference between an entrance echo n=0 and a first back wall echo n=1 and that a drop of the several electrical signals falling into the evaluating aperture (40) below the threshold value UA is found to be a dent (38) and is displayed as such.

5. The apparatus as set forth in claim 4, **characterized in that** one single ultrasonic probe (20), which is operated consecutively as an emitting and as a receiving probe, is utilized as the emitting ultrasonic probe and as the receiving ultrasonic probe.

6. The apparatus as set forth in claim 5, **characterized in that** an evaluation apparatus (34) for determining the wall thickness of the pipe (26) is mounted downstream of the probe (20).

7. The apparatus as set forth in claim 4, **characterized in that** a time slot acquiring a given number of electrical signals of echo pulses, for example the signals of the fifth to eighth echo pulse, is formed in the evaluation unit (36).

8. The apparatus as set forth in claim 4, **characterized in that** the apparatus comprises a drive (27) for allowing relative movement between the pipe (26) and the at least one probe (20).

9. The apparatus as set forth in claim 4, **characterized in that** the evaluation unit (36) comprises a signal sequence counter (44).

10. The apparatus as set forth in claim 4, **characterized in that** a counter (44) for echo pulses is provided in the evaluation unit and that the evaluation is only started by a higher echo pulse, e.g., n greater than 4 or n greater than 7.

## Revendications

1. Procédé de contrôle par ultrasons de tuyaux pour détecter des défauts du tuyau (26), comprenant les étapes de procédé suivantes :
- envoyer des impulsions ultrasonores à partir d'un palpeur à ultrasons (20) de l'extérieur dans le tuyau à contrôler (26) et sur une paroi extérieure (28) du tuyau à contrôler (26),
- réaliser une course de va-et-vient effectuée à n-reprises entre ladite paroi extérieure (28) et une paroi intérieure (30) du tuyau (26) ; à chaque course de va-et-vient de l'impulsion, une partie sortant de la surface extérieure sous forme d'une impulsion d'écho,
- recevoir ces impulsions d'écho au moyen d'un palpeur ultrasonore récepteur qui transforme lesdites impulsions d'écho en signaux électriques, et
- évaluer les signaux électriques dans une unité d'évaluation (36), dans ladite unité d'évaluation (36) étant évalués les signaux électriques de plusieurs impulsions d'écho et dans ladite unité d'évaluation (36) étant prévu un créneau d'évaluation (40) dans lequel tombent plusieurs impulsions d'écho et qui présente une valeur seuil UA,
**caractérisé par le fait que** lesdits défauts sont des déformations concaves sous forme de bosselures (38) existant sur la paroi intérieure (30), que les impulsions ultrasonores sont envoyées pour l'essentiel radialement sur la paroi extérieure (28), que, lors de la course multiple de va-et-vient dans la paroi du tuyau, c'est un seul et même point sur la paroi intérieure du tuyau qui est touché à plusieurs reprises, et que lesdits plusieurs signaux électriques sont évalués dans ladite unité d'évaluation (36) à l'égard de l'importance de la descente desdits plusieurs signaux électriques des impulsions d'écho, que ledit créneau d'évaluation (40) débute après un multiple de la différence horaire entre un écho d'entrée n=0 et un premier écho de fond n=1, et qu'une forte descente des plusieurs signaux électriques au-dessous de ladite valeur seuil UA est indiquée comme une bosselure (38) et qu'une faible descente des plusieurs signaux électriques est indiquée comme un tuyau (26) exempt de bosselures.

2. Procédé selon la revendication 1, **caractérisé par le fait que**, simultanément avec la détection des bosselures (38), on détecte au moyen du même palpeur (20) également l'épaisseur de paroi par une première impulsion d'écho.

3. Procédé selon la revendication 1, **caractérisé par le fait que** ledit tuyau (26) est balayé systématiquement durant le contrôle et qu'un mouvement relatif a lieu entre le tuyau (26) et ledit au moins un palpeur à ultrasons (20).

4. Dispositif de contrôle par ultrasons de tuyaux pour détecter des défauts du tuyau (26), et de mise en oeuvre du procédé selon la revendication 1,
- avec un palpeur à ultrasons (20) qui est disposé sur un bâti et dirigé de l'extérieur pour l'essentiel radialement sur une surface extérieure d'un tuyau à contrôler (26) et à partir duquel des impulsions ultrasonores sont envoyées dans ledit tuyau (26) qui sont réfléchies sur une paroi intérieure (30) du tuyau (26) et qui vont et viennent n fois entre la paroi extérieure (28) et la paroi intérieure (30), respectivement une partie de l'impulsion sortant de la paroi extérieure (28) sous forme d'une impulsion d'écho et une suite d'impulsions d'écho entrant dans un palpeur récepteur (20) qui est disposé sur ledit bâti, et
- avec une unité d'évaluation (36) laquelle est placée à la suite dudit palpeur récepteur (20) et dans laquelle les impulsions d'écho sont évaluées, dans ladite unité d'évaluation (36) étant prévu un créneau d'évaluation (40) dans lequel tombent plusieurs impulsions d'écho et qui présente une valeur seuil UA,
**caractérisé par le fait que** pour détecter des défauts qui sont réalisés comme déformations intérieures concaves sous forme de bosselures (38), plusieurs impulsions d'écho sont évaluées dans ladite unité d'évaluation (36) au moyen de la valeur seuil UA, que le créneau d'évaluation (40) débute après un multiple de la différence horaire entre un écho d'entrée n=0 et un premier écho de fond n=1, et qu'une descente au-dessous de la valeur seuil UA, des plusieurs signaux électriques des impulsions d'écho tombant dans ledit créneau d'évaluation (40) est évaluée comme bosselure (38) et est indiqué en tant que telle.

5. Dispositif selon la revendication 4, **caractérisé par le fait que** l'on utilise en tant que palpeur ultrasonore émetteur et en tant que palpeur ultrasonore récepteur un seul palpeur à ultrasons (20) qui est opéré successivement comme palpeur émetteur et comme palpeur récepteur.

6. Dispositif selon la revendication 5, **caractérisé par le fait qu'**à la suite dudit palpeur (20) est monté en sus un dispositif d'évaluation (34) pour déterminer l'épaisseur de paroi du tuyau (26).

7. Dispositif selon la revendication 4, **caractérisé par le fait que** dans ladite unité d'évaluation (36) est réalisé une fenêtre ou intervalle de temps qui détecte un nombre donné de signaux électriques d'impulsions d'écho, par exemple les signaux de la cinquième à la huitième impulsion d'écho.

8. Dispositif selon la revendication 4, **caractérisé par le fait que** le dispositif présente un mécanisme d'entraînement (27) qui permet un mouvement relatif entre le tuyau (26) et ledit au moins un palpeur (20).

9. Dispositif selon la revendication 4, **caractérisé par le fait que** ladite unité d'évaluation (36) présente un compteur de suite de signaux (44).

10. Dispositif selon la revendication 4, **caractérisé par le fait qu'**un compteur (44) pour impulsions d'écho est prévu dans ladite unité d'évaluation et que l'évaluation n'est déclenchée que par une plus haute impulsion d'écho, par exemple n supérieur à 4 ou n supérieur à 7.
